# EUROPÄISCHE PATENTANMELDUNG

(11) **EP 1 962 033 A1**
(43) Veröffentlichungstag der Anmeldung: **27.08.2008**
(21) Anmeldenummer: 08003216.2
(22) Anmeldetag: 22.02.2008
(51) Int. Cl.: F24H 1/28, F24H 9/00

(54) **Festbrennstoffheizkessel**

(30) Priorität: 23.02.2007 DE 102007009426
(71) Anmelder: Viessmann Werke GmbH & Co. KG, 35107 Allendorf (DE)
(72) Erfinder: Dworiankin, Leopold, 59969 Hallenberg (DE); Middendorf, Stephan, 48432 Rheine (DE)
(74) Vertreter: Wolf, Michael

(57) **Zusammenfassung**

Die Erfindung betrifft einen Festbrennstoffheizkessel, umfassend eine Brennkammer (1) zum Verbrennen eines festen Brennstoffs, wobei sich zur Abfuhr entstehender Rauchgase an die Brennkammer (1) mehrere, als Wärmetauscher ausgebildete Rauchgaszüge (2) anschliessen. Nach der Erfindung ist vorgesehen, dass zum Betrieb des Festbrennstoffheizkessels im Teillastbereich mindestens ein Rauchgaszug (2) verschließbar ausgebildet ist.

## Beschreibung

Die Erfindung betrifft einen Festbrennstoffheizkessel gemäß dem Oberbegriff des Patentanspruchs 1.

Ein Festbrennstoffheizkessel der eingangs genannten Art ist nach der AT 005 587 U1 bekannt. Dieser besteht insbesondere aus einer Brennkammer zum Verbrennen eines festen Brennstoffs, vorzugsweise Holzpellets. Dabei schließen sich zur Abfuhr entstehender Rauchgase an die Brennkammer mehrere, als Wärmetauscher ausgebildete Rauchgaszüge an. Diese rohrförmig ausgebildeten Rauchgaszüge sind in einem Gehäuse angeordnet und heizwasserumflutet.

Beim Betrieb derartiger Festbrennstoffheizkessel bildet sich unter bestimmten Umständen (insbesondere beim Teillastbetrieb) Kondensat in den Rauchgaszügen.

Der Erfindung liegt die Aufgabe zugrunde, bei einem Festbrennstoffheizkessel der eingangs genannten Art der Kondensatbildung entgegenzuwirken, da diese zu Korrosionsschäden am Heizkessel führen kann.

Diese Aufgabe ist mit einem Festbrennstoffheizkessel der eingangs genannten Art durch die im Kennzeichen des Patentanspruchs 1 aufgeführten Merkmale gelöst.

Nach der Erfindung ist also vorgesehen, dass zum Betrieb des Festbrennstoffheizkessels im Teillastbereich mindestens ein Rauchgaszug verschließbar ausgebildet ist.

Mit anderen Worten ausgedrückt, kann insbesondere beim Betrieb im Teillastbereich durch das Verschließen einer bestimmten Anzahl von Rauchgaszügen die Abgastemperatur in den verbleibenden Rauchgaszügen angehoben werden, so dass einer Kondensatbildung wirksam entgegengewirkt wird.
Andere vorteilhafte Weiterbildungen ergeben sich aus den abhängigen Patentansprüchen.

Der Vollständigkeit halber wird noch auf die DE 34 03 225 A1 hingewiesen. Dort ist ein Heizkessel für flüssige und gasförmige Brennstoffe offenbart, bei dem eine Heizgaszugausmündung mit einer Blende verschließbar ist, um eine Durchnässung des Schornsteins zu vermeiden.

Der erfindungsgemäße Festbrennstoffheizkessel einschließlich seiner vorteilhaften Weiterbildungen gemäß der abhängigen Patentansprüche wird nachfolgend anhand der zeichnerischen Darstellung eines bevorzugten Ausführungsbeispiels näher erläutert.

Es zeigt
- Figur 1: den erfindungsgemäßen Festbrennstoffheizkessel von der Seite im Schnitt; und
- Figur 2: den Festbrennstoffheizkessel gemäß Figur 1 entlang der Schnittlinie A-A von oben.

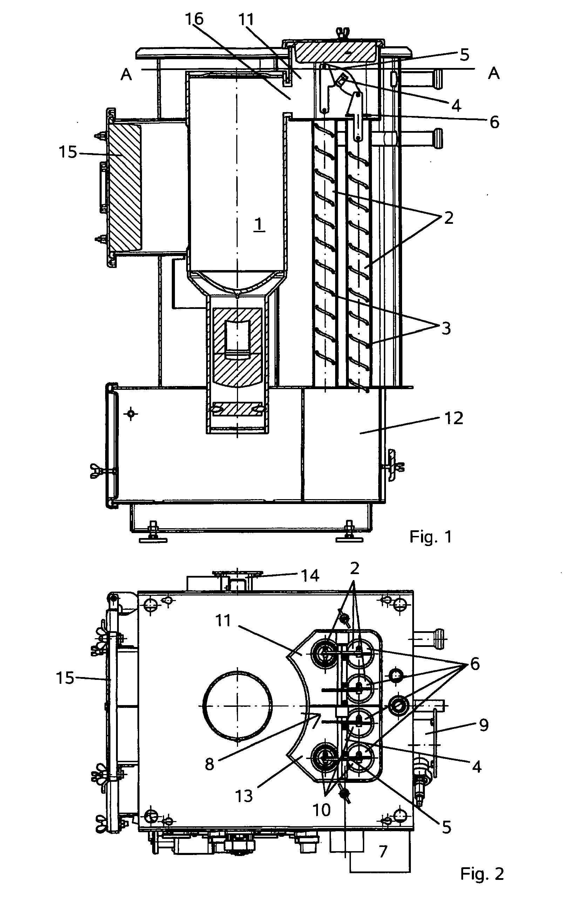

Der in den Figuren 1 und 2 dargestellte Festbrennstoffheizkeasel besteht aus einer Brennkammer 1 zum Verbrennen eines festen Brennstoffs, insbesondere Holzpellets, wobei sich zur Abfuhr entstehender Rauchgase an die Brennkammer 1 mehrere, als Wärmetauscher ausgebildete Rauchgaszüge 2 anschliessen.

In an sich bekannter Weise werden diesem Kessel über den Anschluss 14 Holzpellets zugeführt. Diese landen dann im unteren Bereich der Brennkammer 1, wo sie in einem Glutbett verbrennen. Zu Revisionszwecken ist an der Brennerkammer 1 ein Deckel 15 angeordnet.

Wesentlich für den erfindungsgemäßen Festbrennstoffheizkessel ist nun, dass zum Betrieb des Festbrennstoffheizkessels im Teillastbereich mindestens ein Rauchgaszug 2 verschließbar ausgebildet ist. Wie erwähnt, gewährleistet diese Maßgabe, dass sich wegen der dadurch bedingten Erhöhung der Abgastemperatur in den verbleibenden Rauchgaszügen kein Kondensat bilden kann, was wiederum den Featbrennstoffheizkessel und insbesondere dessen Rauchgaszüge vor Korrosion schützt.

Wie an sich aus der AT 005 587 U1 bekannt, ist auch bei der bevorzugten Ausführungsform des Festbrennstoffheizkessels vorgesehen, dass zur Reinigung der Rauchgaszüge 2 in diesen axial verstellbare Reinigungselemente 3 angeordnet sind, wobei zur Verstellung der Reinigungselemente 3 um eine Achse 4 drehbare Hebel 5 vorgesehen sind, an deren drehachsenabgewandten Ende die Reinigungselemente 3 angeordnet sind. Die Reinigungselemente 3 sind dabei wie bei der AT 005 587 U1 bevorzugt als wendelförmige Einsätze ausgebildet, deren Durchmesser dem Innendurchmesser der vorzugsweise im Querschnitt kreisförmig ausgebildeten Rauchgaszüge entspricht, d. h. durch die Axialverschiebung werden Ablagerungen an den Wänden der Rauchgaszüge mechanisch abgeschert.

Besonders bevorzugt ist vorgesehen, dass an mindestens einem Reinigungselement 3 ein Verschlusselement 6 für den Rauchgaszug 2 vorgesehen ist. Dabei kann, muss aber nicht, ferner vorgesehen sein, dass mindestens ein Reinigungselement 3 unabhängig von den anderen Reinigungselementen 3 axial verstellbar ausgebildet ist. Zur Axialverstellung des mit dem Verschlusselement 6 versehenen Reinigungselements 3 ist eine mit einer Heizkesselregelung 7 wirkverbundene Stellmechanik 8 vorgesehen, die insbesondere aus den oben genannten, an einer Achse 4 gelagerten Hebeln 5 gebildet ist.

Da die Reinigungselemente 3 ohnehin mit einer entsprechenden Stellmechanik 8 zu versehen sind, ist es erfindungsgemäß besonders vorteilhaft, diese Stellmechanik 8 auch für die Betätigung der Verschlusselemente 6 zu nutzen, und zwar insbesondere dadurch, dass die Stellmechanik 8 mit der Heizkesselregelung 7 regelungstechnisch verbunden ist. Da ferner nicht alle Reinigungselemente 3 mit Verschlusselementen 6 versehen sind, beeinflusst eine Verstellung eines Reinigungselements 3 mit Verschlusselement 6 auch nicht die Rauchgasdurchlässigkeit desjenigen Rauchgaszuges 2, an dem kein Verschlusselement 6 vorgesehen ist.

Um eine Kondensatbildung sicher auszuschließen, ist besonders bevorzugt vorgesehen, dass der Rauchgaszug 2 brennkammerseitig verschließbar ausgebildet ist, d. h. es wird von vornherein vermieden, dass Rauchgas in einen oder mehrere der Züge gelangt.

Mit nochmaligem Verweis auf die Figuren 1 und 2 ist bei der bevorzugten Ausführungsform des erfindungsgemäßen Festbrennstoffheizkessel vorteilhaft vorgesehen, dass der Brennkammer 1 eine erste Rauchgassammelkammer 11 nachgeschaltet ist, von der eine erste Gruppe von Rauchgaszügen 2 abgeht, die in eine zweite Rauchgassammelkammer 12 ausmünden, an die sich eine zweite Gruppe von Rauchgaszügen 10 anschließt, die zu einer dritten, mit einem Rauchgasabfuhranschluss 9 versehenen Rauchgassammelkammer 13 führen, wobei die zweite Rauchgassammelkammer 12 bevorzugt als Umlenkkammer ausgebildet ist und die erste und zweite Gruppe von Rauchgaszügen 2, 10 parallel zueinander angeordnet sind.

Das aus der Brennkammer 1 kommende Rauchgas gelangt also über den Kanal 16 zunächst in die erste Rauchgassammelkammer 11. Je nach Betriebsweise, sprich Öffnungsstellung der verschlusselemente 6, strömt das Rauchgas bei der dargestellten Ausführungsform anschließend über einen oder drei Rauchgaszüge 2 in die zweite Rauchgassammelkammer 12. Wiederum abhängig von der Stellung der Verschlusselemente 6 strömt das Rauchgas von dort über die zweite Gruppe von Rauchgaszügen 10 zur dritten Rauchgassammelkammer 13 und von dort zum Abgasabfuhranschluss 9. Dabei sind insbesondere die Rauchgaszüge 2, 10 in einem wasserführenden Gehäuse untergebracht, so dass die im Rauchgas enthaltene Wärme an ein Heizmedium abführbar ist.

Wie aus obigen Erläuterungen zu entnehmen ist, sind sowohl Rauchgaszüge 2 der ersten als auch Rauchgaszüge 10 der zweiten Gruppe verschließbar ausgebildet, wobei hierzu in der ersten und dritten Rauchgassammelkammer 11, 13 eine Stellmechanik 8 zur Betätigung der Reinigungselemente 3 vorgesehen ist. Bei der in Figur 1 und 2 dargestellten Ausführungsform ist darüber hinaus vorgesehen, die erste und dritte Rauchgassammelkammer 11, 13 nebeneinander anzuordnen und die Stellmechanik 8 über ein gemeinsames Stellglied mit einer Heizkesselregelung 7 zu verbinden. All diese Maßgaben führen, wie ersichtlich, zu einem konstruktiv vergleichsweise einfachen, einen guten Wärmeaustausch gewährleistenden und taupunktsicher betreibbaren Festbrennstoffheizkessel.

### Bezugszeichenliste

- 1: Brennkammer
- 2: Rauchgaszug
- 3: Reinigungselement
- 4: Achse
- 5: Hebel
- 6: Verschlusselement
- 7: Heizkesselregelung
- 8: Stellmechanik
- 9: Rauchgasabfuhranschluss
- 10: Rauchgaszug
- 11: erste Rauchgassammelkammer
- 12: zweite Rauchgassammelkammer
- 13: dritte Rauchgassammelkammer
- 14: Anschluss
- 15: Deckel
- 16: Kanal

## Patentansprüche

1. Festbrennstoffheizkessel, umfassend eine Brennkammer (1) zum Verbrennen eines festen Brennstoffs, wobei sich zur Abfuhr entstehender Rauchgase an die Brennkammer (1) mehrere, als Wärmetauscher ausgebildete Rauchgaszüge (2) anschliessen,
**dadurch gekennzeichnet,**
**dass** zum Betrieb des Festbrennstoffheizkessels im Teillastbereich mindestens ein Rauchgaszug (2) verschließbar ausgebildet ist.

2. Festbrennstoffheizkessel nach Anspruch 1,
**dadurch gekennzeichnet,**
**dass** zur Reinigung der Rauchgaszüge (2) in diesen axial verstellbare Reinigungselemente (3) angeordnet sind, wobei vorzugsweise zur Verstellung der Reinigungselemente (3) um eine Achse (4) drehbare Hebel (5) vorgesehen sind, an deren drehachsenabgewandten Ende die Reinigungselemente (3) angeordnet sind.

3. Festbrennstoffheizkessel nach Anspruch 2,
**dadurch gekennzeichnet,**
**dass** an mindestens einem Reinigungselement (3) ein verschlusselement (6) für den Rauchgaszug (2) vorgesehen ist, wobei vorzugsweise zur Axialverstellung des mit dem Verschlusselement (6) versehenen Reinigungselements (3) eine mit einer Heizkesselregelung (7) wirkverbundene Stellmechanik (8) vorgesehen ist.

4. Festbrennstoffheizkessel nach einem der Ansprüche 1 bis 3,
**dadurch gekennzeichnet,**
**dass** der Rauchgaszug (2) brennkammerseitig verschließbar ausgebildet ist.

5. Festbrennstoffheizkessel nach einem der Ansprüche 1 bis 4,
**dadurch gekennzeichnet,**
**dass** der Brennkammer (1) eine erste Rauchgassammelkammer (11) nachgeschaltet ist, von der eine erste Gruppe von Rauchgaszügen (2) abgeht, die in eine zweite Rauchgassammelkammer (12) ausmünden, an die sich eine zweite Gruppe von Rauchgaszügen (10) anschließt, die zu einer dritten, mit einem Rauchgasabfuhranschluss (9) versehenen Rauchgassammelkammer (13) führen.

6. Festbrennstoffheizkessel nach Anspruch 5,
**dadurch gekennzeichnet,**
**dass** die zweite Rauchgassammelkammer (12) als Umlenkkammer ausgebildet ist und die erste und zweite Gruppe von Rauchgaszügen (2, 10) parallel zueinander angeordnet sind.

7. Festbrennstoffheizkessel nach Anspruch 5 oder 6,
**dadurch gekennzeichnet,**
**dass** sowohl Rauchgaszüge (2) der ersten als auch Rauchgaszüge (10) der zweiten Gruppe verschließbar ausgebildet sind.

8. Festbrennstoffheizkessel nach einem der Ansprüche 5 bis 7,
**dadurch gekennzeichnet,**
**dass** in der ersten und dritten Rauchgassammelkammer (11, 13) eine Stellmechanik (8) zur Betätigung der Reinigungselemente (3) vorgesehen ist.

9. Festbrennstoffheizkesael nach einem der Ansprüche 5 bis 8,
**dadurch gekennzeichnet,**
**dass** die erste und dritte Rauchgassammelkammer (11, 13) nebeneinander angeordnet sind und die Stellmechanik (8) über ein gemeinsames Stellglied mit einer Heizkesselregelung (7) verbunden ist.

10. Festbrennstoffheizkessel nach einem der Ansprüche 2 bis 9,
**dadurch gekennzeichnet,**
**dass** die Reinigungselemente (3) als wendelförmige Einsätze ausgebildet sind.
